(19) Europäisches Patentamt

European Patent Office

Office européen des brevets

(11) **EP 4 395 226 A1**

(12) **EUROPEAN PATENT APPLICATION**

(43) Date of publication:
**03.07.2024 Bulletin 2024/27**

(21) Application number: **23168475.4**

(22) Date of filing: **18.04.2023**

(51) International Patent Classification (IPC):
*H04L 9/00* (2022.01)    *G06F 7/02* (2006.01)
*H04L 9/30* (2006.01)

(52) Cooperative Patent Classification (CPC):
**H04L 9/008; G06F 7/02; H04L 9/3093**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Vaultree, Ltd.**
**Cork T12 RD43 (IE)**

(72) Inventor: **Pradhan, Anil**
**Dublin (IE)**

(74) Representative: **Gillespie, Richard**
**Inventorship**
**Suite 10050**
**5 Fitzwilliam Square**
**Dublin 2, D02 R744 (IE)**

Remarks:
•Claims 16, 18-23 are deemed to be abandoned due to non-payment of the claims fees (Rule 45(3) EPC).
•Amended claims in accordance with Rule 137(2) EPC.

(54) **ENCRYPTED DATA COMPARISON USING BOOTSTRAPING EVALUTION INVOLVING TORUS BASED FULLY HOMOMORPHIC SCHEMES**

(57) The present disclosure relates to a system and method for manipulating encrypted data. In particular, the present disclosure relates to improvements homomorphic encryption. Homomorphic encryption is a form of encryption that allows computations to be performed on encrypted data without first having to decrypt it. As such, computations can be performed on data that has been homomorphically encrypted without access to the secret key. The output from a computation performed on homomorphically encrypted data will be homomorphically encrypted data. This output can be left in an encrypted form.

**EP 4 395 226 A1**

**Description**

Field of the Invention

The present disclosure relates to a system and method for comparing encrypted data, where the data has been encrypted using homomorphic encryption method.

Background

Homomorphic encryption is a form of encryption that allows computations to be performed on encrypted data without first having to decrypt it. As such, computations can be performed on data that has been homomorphically encrypted without access to the secret key. The output from a computation performed on homomorphically encrypted data will be homomorphically encrypted data. This output can be left in an encrypted form. When the output of a computation performed on homomorphically encrypted data is decrypted, the output from the decryption will be identical to that produced by performing the computation on a decrypted version of the homomorphically encrypted data. Thus, homomorphic encryption can be used to provide the functionality to add two encrypted numbers or multiply two encrypted numbers (the word 'or' is intended to be an inclusive or - a or b means at least one from a, b, and ab; 'xor' is intended to be used as exclusive or - a xor b means either a or b).

For example, taking $E(\ )$ as an encryption function and x and y as two numbers, $E(x)$, $E(y)$ are the encrypted versions of x and y. I.e. $x \rightarrow E(x)$, $y \rightarrow E(y)$. $E(\ )$ is homomorphic with respect to addition if we can evaluate $E(x+y)$ (the encrypted sum of two numbers) from the encrypted numbers $E(x)$, $E(y)$ without decrypting them. I.e. $E(x)+E(y) \rightarrow E(x+y)$. Similarly, $E(\ )$ is homomorphic with respect to multiplication if we can evaluate encryption of $E(x.y)$ (the encrypted product of two numbers) from encryption of individual numbers i.e., $E(x),E(y)$ without decrypting them. I.e. $E(x).E(y) \rightarrow E(x.y)$

Thus, homomorphic encryption can be used for privacy-preserving outsourced storage and computation. This allows data to be encrypted and out-sourced to commercial cloud environments for processing, all while encrypted.

For sensitive data, such as health care information, homomorphic encryption can be used to remove privacy barriers that obstruct the efficient exchange of data or to increase the security of existing services. For example, predictive analytics in health care (e.g. the use of analytics based on a user's weight to predict an imminent heart-attack) can be hard to apply via a third party service provider due to medical data privacy concerns - but if the predictive analytics service provider can operate on encrypted data instead, these privacy concerns are diminished or obviated. Moreover, even if the service provider's system is compromised, the data remains secure.

Partially Homomorphic Encryption (PHE) encompasses schemes that support the evaluation of circuits consisting of only one type of gate/operation, e.g., addition xor multiplication.

Fully Homomorphic Encryption (FHE) encompasses schemes that support the evaluation of arbitrary circuits composed of multiple types of gates (e.g. addition or multiplication) of unbounded depth and is the strongest notion of homomorphic encryption. As used herein 'unbounded depth' means that a FHE is not limited by a bound specified at setup (i.e. the number of operations that can be performed is not limited).

Background to the Invention

Homomorphic encryption methods have been developed using different approaches. For example, the research paper entitled "Fully Homomorphic Encryption Using Ideal Lattices" by Craig Gentry describes a method of FHE. This method uses ideal lattices in a lattice-based cryptography system. This method supports both addition and multiplication operations on ciphertexts, from which it is possible to construct circuits for performing arbitrary computation. Further, this scheme is a "bootstrappable" FHE scheme. A bootstrappable FHE scheme is capable of evaluating its own decryption circuit and then at least one more operation (e.g. NAND). To put it differently, 'bootstrapping' refers to homomorphically decrypting a ciphertext using a homomorphic encryption of its own decryption key, with the goal of reducing the noise the ciphertext contains.

Previously, there was a problem evaluating a circuit with too many gates. In particular, the evaluation of each gate in the circuit adds noise and, at a certain point, this amount of noise renders the cyphertext impossible to decrypt. However, i) taking the decryption algorithm for a scheme and converting it into a circuit and ii) passing a ciphertext and an encrypted version of the private key through the circuit produced a 'clean' ciphertext of the same plaintext - i.e. noise is removed from the ciphertext. Furthermore, the circuit allowed you to run at least one NAND gate on two ciphertexts (a couple of gates that were equivalent to a NAND) and the decryption circuit without the result being rendered unretrievable by noise. As used in this disclosure, unless otherwise specified, the term 'circuit' refers to a boolean circuit (i.e., a circuit made of Boolean gates such as AND, NAND, OR, NOR, and NOT gates) that computes a function f.

The paper entitled "Fully Homomorphic Encryption over the Integers" by van Dijk, et al, sets out a FHE scheme which does not require ideal lattices.

The paper entitled "Homomorphic Encryption from Learning with Errors: Conceptually-Simpler, Asymptotically-Faster, Attribute-Based" by Craig Gentry et al describes cryptosystem (referred to in the art as the Gentry-Sahai-Waters (GSW) cryptosystem after the authors of the paper) for building FHE schemes that avoids an expensive "relinearization" step in homomorphic multiplication.

The paper entitled "Faster Fully Homomorphic Encryption: Bootstrapping in less than 0.1 Seconds" by Ilaria Chillotti et al discusses FHE based on the GSW cryptosystem and its ring variants. In particular, the internal product of the GSW cryptosystem can be replaced by a simpler external product between a GSW cryptosystem and a learning with errors (LWE) ciphertext. The paper entitled "TFHE: Fast Fully Homomorphic Encryption Over the Torus" by Ilaria Chillotti et al discloses a fast FHE scheme implemented over the torus (TFHE) that generalizes and improves the fully homomorphic encryption (FHE) based on GSW and its ring variants.

As mentioned above, a FHE method that is bootstrappable can homomorphically evaluate its own decryption procedure in addition to at least one extra operation. As shown in Fig. 1, evaluating the decryption procedure in the classical sense requires a ciphertext and secret key as input and ensures the plaintext as output. In FHE, however, we deal with a homomorphic evaluation of the decryption procedure, i.e., bootstrapping, which uses an encrypted secret key and a ciphertext to generate an "equivalent" ciphertext. This "equivalent" ciphertext can be used for further computations. The encrypted secret key, also called a bootstrapping key or refreshing key, is provided by the secret key holder as part of the public key material.

FHE schemes are based on noisy encryptions. In such encryption schemes, the noise guarantees the security of fresh encryption. However, in such schemes evaluating homomorphic operations increases the noise magnitude and lowers the quality, i.e., computational budget, of ciphertexts. Bootstrapping is used to convert an exhausted ciphertext into an "equivalent" refreshed ciphertext. Exhausted ciphertexts contain high noise and cannot be operated on further, whereas refreshed ciphertexts can support further homomorphic operations.

In addition, bootstrapping can be used to evaluate a function on the encrypted message during the bootstrapping operation. In this case, the output ciphertext of bootstrapping encrypts a function of the plaintext message rather than the message itself (in addition to reducing the noise in the input ciphertext). This form of bootstrapping is known as functional or programmable bootstrapping. I.e. Programmable bootstrapping is an extension of the bootstrapping technique that allows resetting the noise to a fixed level while-at the same time-evaluating a function on the input ciphertext.

The paper entitled "Programmable Bootstrapping Enables Efficient Homomorphic Inference of Deep Neural Networks" by Ilaria Chillotti et al discloses a Programmable Bootstrapping method that can be used with a variant of the TFHE fully homomorphic encryption method.

To put it differently, if E(x) is an encrypted version of a number x and f( ) is any other function we wish to perform on x, then a programmable bootstrapping method is able to determine the encrypted value of f(x):

$$f(E(x)) \to E(f(x))$$

Programmable bootstrapping can use a LUT (Lookup Table) specific for each function, in the form of a polynomial, that contains all the values in the domain and an evaluation of f() at those values:

$$\{(x_i, f(x_i)) : x_i \in D)\}$$

where D is the domain of function f() (i.e. D is the set of all possible input values that produce a real output from f()).

Thus, applying programmable bootstrapping on $E(x_i)$ with the above LUT will result $E(f(x_i))$. However, the size of the LUT can be huge depending on the function to be evaluated, as all possible pairs of input and output values of the function must be included. Thus, in practice, LUTs have been seen as computational expensive for the evaluation of functions in FHE systems.

Further, it has to date not been possible to use LUTs efficiently for the evaluation of a function that operates on a plurality of inputs.

Object of the Invention

The present disclosure is directed towards increasing the security of client-server systems through addressing comparing at least two encrypted numbers x,y (e.g., equal x=y, less than x<y, or greater than x>y) and returning an encrypted result without decrypting either the encrypted numbers or the result. Further, it is possible to use comparison to sort encrypted numbers without decryption. For example, provide a method which, given a set of encrypted numbers $\{E(x_1), E(x_2), ..., E(x_n)\}$ as an input, returns an ordered set sorted in increasing order $\{E(x_{i_1}), E(x_{i_2}), ... , E(x_{i_n})\}$ such that e.g. $x_{i_1} \le x_{i_2} \le ... \le x_{i_n}$. Alternatively a method can be provided that returns an ordered set sorted in decreasing order

$\{E(x_{i_n}), E(x_{i_{n-1}}), ... , E(x_{i_1})\}$ such that e.g. $x_{i_n} \geq x_{i_{n-1}} \geq ... \geq x_{i_1}$.

Summary of the Invention

The present disclosure is directed towards a computer implemented method for manipulating encrypted data comprising comparing a homomorphically encrypted first data value, E(y), with a homomorphically encrypted second data value, E(x), in a homomorphic encryption system, the method comprising: subtracting the homomorphically encrypted first data value, E(y), from the homomorphically encrypted second data value, E(x), to produce a homomorphically encrypted third data value, E(z); and using programmable bootstrapping to evaluate a function, f, on the homomorphically encrypted third data value E(z), wherein the function, f, returns: an encrypted first value, $E(r_0)$, if the third data value is zero, or an encrypted second value, $E(r_1)$, if the third data value is negative, or an encrypted third value, $E(r_2)$, if the third data value is positive, whereby an encrypted result, E(r), is output by the programmable bootstrapping step where the encrypted result E(r), when decrypted, is a value indicative of the result of the comparison.

Preferably, using programmable bootstrapping to evaluate the function, f, on the homomorphically encrypted third data value E(z) comprises: using a lookup table to find an encrypted value indicative of the outcome of a comparison based on the homomorphically encrypted third data value.

Preferably, at least one value in the look up table is a client defined encrypted value.

Preferably, the method comprises sorting the first and second value in order of magnitude based on the results of the comparison. Preferably, first and second values represent one or more alpha numeric characters.

Preferably, the method comprises assigning a client defined first encrypted value $E(v_1)$ to the encrypted second value $E(r_1)$, and a client defined second encrypted value $E(v_2)$ value to the encrypted third value $E(r_2)$. Preferably, difference between the client defined first value $v_1$ and the client defined second value $v_2$ is 1. More preferably, the client defined first value $v_1$ is equal to zero.

Preferably, either the client defined first value $v_1$ or the client defined second value $v_2$ is assigned to the encrypted first value $E(r_0)$. Alternatively, a client defined third encrypted value $E(v_0)$ value is assigned to the encrypted first value $E(r_0)$.

The present disclosure is also directed towards a computer implemented method for machine learning comprising a method as described above.

The present disclosure is also directed towards a computer implemented method for performing an it-then step comprising the method of any preceding claim.

The present disclosure is also directed towards a computer program comprising instructions which, when the program is executed by a computer, cause the computer to carry out the method described above.

The present disclosure is also directed towards a computer-readable medium comprising instructions which, when executed by a computer, cause the computer to carry out the method described above.

The present disclosure is also directed towards a computing device comprising means for comparing a homomorphically encrypted first data value, E(y), with a homomorphically encrypted second data value, E(x), in a homomorphic encryption system, said means comprising: means for subtracting the homomorphically encrypted first data value, E(y), from the homomorphically encrypted second data value, E(x), to produce a homomorphically encrypted third data value, E(z); and means for using programmable bootstrapping for the evaluation of a function, f, on the homomorphically encrypted third data value E(z), wherein the means for using is configured to return: an encrypted first value, $E(r_0)$, if the third data value is zero, or an encrypted second value $E(r_1)$, if the third data value is negative, or an encrypted third value $E(r_2)$ if the third data value is positive, whereby: the computing device is configured to provide an encrypted result, E(r), wherein the encrypted result, E(r), when decrypted, is a value indicative of the result of the comparison.

Preferably, the computing device is configured to use a lookup table to find an encrypted value indicative of the outcome of a comparison based on the homomorphically encrypted third data value.

The present disclosure is also directed towards a computer implemented method for manipulating encrypted data comprising sorting, by magnitude, a tuple of homomorphically encrypted data valued, E(x) and E(y), in a homomorphic encryption system, the method comprising: comparing the two encrypted input values, E(x) and E(y), and providing an encrypted output value, $E(r)$, wherein:
the step of comparing is configured to output: an encrypted first output value $E(v_1)$ if x is less than y, wherein the first output value $v_1$ is a predefined value indicative of x being less than y; and an encrypted second output value $E(v_2)$ if x is greater than y, wherein the second output value $v_2$ is a predefined value indicative of x being greater than y; and determining the encrypted input value that has, when decrypted, the largest or smallest magnitude based on the encrypted output value, $E(r)$, provided by the comparison, the encrypted first output value $E(v_1)$, and the encrypted second output value $E(v_2)$.

Preferably, the difference between the first output value $v_1$ and the second output value $v_2$ equals 1. Preferably, either the first output value $v_1$ or the second output value $v_2$ equals 1.

Ideally, determining the encrypted input value having the largest or smallest magnitude comprises calculating the encrypted input value that has, when decrypted, the smallest magnitude, $E(s)$, based on:

$$E(s) = \big(E(v_2) - E(r)\big).E(x) + \big(E(\text{r}) - E(v_1)\big).E(y).$$

The present disclosure is also directed towards a computer program comprising instructions which, when the program is executed by a computer, cause the computer to carry out the method of sorting described above.

The present disclosure is also directed towards a computer-readable medium comprising instructions which, when executed by a computer, cause the computer to carry out the method of sorting described above.

The present disclosure is further directed towards a computing device comprising means for manipulating sorting, by magnitude, a tuple of homomorphically encrypted data valued, E(x) and E(y), in a homomorphic encryption system, the means comprising: means for comparing the two encrypted input values, E(x) and E(y), and providing an encrypted output value, $E(r)$, wherein: the means for comparing is configured to output: an encrypted first output value $E(v_1)$ if x is less than y, wherein the first output value $v_1$ is a predefined value indicative of x being less than y; and an encrypted second output value $E(v_2)$ if x is greater than y, wherein the second output value $v_2$ is a predefined value indicative of x being greater than y; and means for determining the encrypted input value that has, when decrypted, the largest or smallest magnitude based on the encrypted output value, $E(r)$, provided by the comparison, the encrypted first output value $E(v_1)$, and the encrypted second output value $E(v_2)$.

Detailed Description

For any two numbers x and y there can be three possible comparative relation between them x=y, x<y, and x>y. Determining these relations is trivial when the values of x and y are known - however this compromises security as x and y are not encrypted. But at present there is no efficient method for securely comparing encrypted versions of those numbers (E(x), E(y)). In this disclosure E( ) signifies an encrypted version of a number - i.e. E(x) is an encrypted version of the number x.

We can define a first function $f_1()$ that returns at least one of three different encrypted values $E(r_0)$, $E(r_1)$, $E(r_2)$ depending on whether comparison algorithm is x=y, x<y, or x>y respectively. I.e:

If x=y then $f_1$(E(x), E(y)) returns $E(r_0)$ (an encryption version of ro),
If x<y then $f_1$(E(x), E(y)) returns $E(r_1)$ (an encryption version of $r_1$), or
If x>y then $f_1$(E(x), E(y)) returns $E(r_2)$ (an encryption version of $r_2$).

The values of returned by the function $f_1()$ (i.e. $r_0$, $r_1$, $r_2$) can assigned by the user device. For example, a user device might assign 0 to $r_0$, 1 to $r_1$, or 2 to $r_2$ (i.e. $r_0$=0, $r_1$=1, and $r_2$=2). In this case, the values of $E(r_0)$, $E(r_1)$, or $E(r_2)$ can be provided by a client device for use at a server. Thus, a server, will perform the first function as follows:

If x=y then $f_1$(E(x), E(y)) returns $E(0)$ (the number 0 encrypted)
If x<y then $f_1$(E(x), E(y)) returns $E(1)$ (the number 1 encrypted)
If x>y then $f_1$(E(x), E(y)) returns E(2) (the number 2 encrypted)

To date, it has not been feasible to evaluate this function using a LUT because all possible values of x and y need to be provided. However, by subtracting E(y) from E(x) as part of a FHE system produces E(z) where z=x-y. A lookup table can be created for a function on z that outputs $r_0$, $r_1$, or $r_2$ depending on the value of z, e.g:

$$f_1(z) = \begin{cases} r_0 & z = 0 \\ r_1 & z < 0 \\ r_2 & z > 0 \end{cases} => f_1\big(E(z)\big) = E(f_1(z)) = \begin{cases} E(r_0) & z = 0 \\ E(r_1) & z < 0 \\ E(r_2) & z > 0 \end{cases}$$

*Equation 1*

Thus, the lookup table will be $\{(z, f_1(z)) : z \in D\}$ - and programmable bootstrapping can be applied to this look up table. I.e:

$$If\ x = y\ then\ E(x - y) = E(z), z = 0$$

and the output from a programmable bootstrapping step will be:

$$E(f_1(z = 0)) = E(r_0)$$

*If x < y then E(x - y) = E(z), z < 0 and the output from a programmable bootstrapping step will be:*

$$E(f_1(z < 0)) = E(r_1)$$

*If x > y then E(x - y) = E(z), z > 0 and the output from a programmable bootstrapping step will be:*

$$E(f_1(z > 0)) = E(r_2)$$

As can be seen, this allows the comparison of two numbers (x and y) to be performed as a function on a single number (z) without either the numbers or the result of the comparison being decrypted. I.e. a server can compare two numbers and provide an encrypted output indicative of the result of the comparison without the result, E(r), being known at the server.

Further, by using comparisons, it is possible to provide a second function $f_2$ that outputs an ordered pair (tuple) of encrypted numbers that have been sorted in order of magnitude from an input of two encrypted numbers E(x) and E(y).

For example, a tuple may preferably provide an encrypted version of the smaller number followed by the encryption version of the larger number, thereby providing encrypted values which are output as sorted in increasing order. I.e:

$$f_2(E(x), E(y)) = \begin{cases} (E(x), E(y)), & if\ x \leq y \\ (E(y), E(x)), & if\ x > y \end{cases}$$

*Equation 2*

Sorting can be performed e.g. as follows:

i) the first step uses the encrypted comparison method described above to compare the two encrypted inputs. While the comparison method described above is preferred, other systems and methods $f_g$ for comparing two encrypted values may be used, e.g:

$$E(f_g(x, y)) = \begin{cases} E(r_0) & x = y \\ E(r_1) & x < y \\ E(r_2) & x > y \end{cases}$$

However, the system or method chosen for comparing two encrypted values needs to be one in which allows the predefinition of the unencrypted values (i.e. $r_0$, $r_1$ and $r_2$) output by the comparison in encrypted form. It is to be noted that the values output from the comparison are output in encrypted form and that the device performing the comparison will not be able to access the result of the comparison.

For example, a first value $v_1$ is assigned to $r_0$, and $r_1$, and a second value $v_2$ is assigned to $r_2$. Preferably, $v_2 - v_1 = 1$. E(r) is the unknown encrypted result returned by the comparison. E(r) will equal $E(v_1)$ when x≤y. Similarly, E(r) will equal $E(v_2)$ when x>y.

As $r_0$ is the value returned when a x=y, it can also be handled for the purposes of sorting by assigning $r_0$ a value of $v_2$. For example, to may be assigned a value of $v_2$ - which means that E(r) will equal $E(v_2)$ when x≥y. I.e.

$$f_2(E(x), E(y)) = \begin{cases} (E(x), E(y)), & if\ x < y \\ (E(y), E(x)), & if\ x \geq y \end{cases}$$

*Equation 3*

ii) using equation 2 for the purposes of illustration, the encrypted version of the smaller number of the two numbers can be determined from the results of the comparison, e.g. using the difference between $v_1$ and E(r) and difference between $v_2$ and E(r) - e.g:

$$E(s) = \big(E(v_2) - E(r)\big).E(x) + \big(E(r) - E(v_1)\big).E(y)$$

*Equation 4*

When $x \le y$, then $f_1(E(z)) = E(v_1)$ i.e., $E(r) = E(v_1)$ and Equation 4 becomes:

$$E(s) = \big(E(v_2) - E(r)\big).E(x) + \big(E(r) - E(v_1)\big).E(y)$$
$$\Rightarrow E(s) = \big(E(v_2) - E(v_1)\big).E(x) + \big(E(v_1) - E(v_1)\big).E(y)$$
$$\Rightarrow E(s) = E(1)E(x) + E(0)E(y) \Rightarrow E(s) = E(x).$$

When $x > y$, then $f_1(E(z)) = E(v_2)$ i.e., $E(r) = E(v_2)$ and Equation 4 becomes:

$$E(s) = \big(E(v_2) - E(r)\big).E(x) + \big(E(r) - E(v_1)\big).E(y)$$
$$\Rightarrow E(s) = \big(E(v_2) - E(v_2)\big).E(x) + \big(E(v_2) - E(v_1)\big).E(y)$$
$$\Rightarrow E(s) = E(0)E(x) + E(1)E(y)$$
$$\Rightarrow E(s) = E(y)$$

iii) the encrypted version of the larger number I can also be determined from the results of the comparison, e.g. using the difference between $v_1$ and E(r) and difference between $v_2$ and E(r) - e.g:

$$E(l) = \big(E(r) - E(v_1)\big).E(x) + \big(E(v_2) - E(r)\big).E(y)$$

*Equation 5*

When $x \le y$, then $f_1(E(z)) = E(v_1)$ i.e., $E(r) = E(v_1)$ and Equation 5 becomes:

$$E(l) = \big(E(v_1) - E(v_1)\big).E(x) + \big(E(v_2) - E(v_1)\big).E(y)$$
$$\Rightarrow E(l) = E(0).E(x) + E(1)E(y)$$
$$\Rightarrow E(l) = E(y).$$

When $x > y$, then $f_1(E(z)) = E(v_2)$ i.e., $E(r) = E(v_2)$ and Equation 5 becomes:

$$E(l) = \big(E(v_2) - E(v_1)\big).E(x) + \big(E(v_2) - E(v_2)\big).E(y)$$
$$\Rightarrow E(l) = E(1).E(x) + E(0)E(y)$$
$$\Rightarrow E(l) = E(x)$$

As a result, the output of this sort operation provides an encrypted version of a smaller number E(s) and an encryption version of a larger number E(I), arranged in ascending order, from an input of two encrypted values E(x) and E(y). I.e:

$$f_2\{E(x), E(y)\} \to \{E(s), E(l)\}$$

It is theoretically possible to use values of $v_1$ and $v_2$ that do not satisfy the equation $v_2 - v_1 = 1$. However, this can only be achieved through dividing equations 4 and 5 by ($v_2 - v_1$) and at present there are no efficient known algorithm to perform division in a FHE system.

Preferably, $v_1 = 0$ and $v_2 = 1$ as this simplifies the above calculations. E.g:

$$E(s) = \big(E(v_2) - E(r)\big).E(x) + \big(E(r) - E(v_1)\big).E(y)$$

$$\Rightarrow E(s) = \big(E(1) - E(r)\big).E(x) + E(r).E(y)$$

$$E(l) = \big(E(r) - E(v_1)\big).E(x) + \big(E(v_2) - E(r)\big).E(y)$$

$$\Rightarrow E(l) = E(r).E(x) + \big(E(1) - E(r)\big).E(y)$$

$$if\ v_2 = 1\ and\ v_1 = 0.$$

Then

$$(x \le y) \Rightarrow E(r) = E(0)$$

$$\Rightarrow E(s) = E(1)E(x) + E(0)E(y) = E(x), \qquad E(l) = E(0)E(x) + E(1)E(y) = E(y)$$

$$(x > y) \Rightarrow E(r) = E(1)$$

$$\Rightarrow E(s) = E(0)E(x) + E(1)E(y) = E(y), \qquad E(l) = E(1)E(x) + E(0)E(y) = E(x)$$

Similarly, a further (or alternative) function f3() can be provided such that:

$$f_3(E(x), E(y)) = \begin{cases} \big(E(x), E(y)\big), & if\ x \ge y \\ \big(E(y), E(x)\big), & if\ x < y \end{cases}$$

In this case,

$$E(s) = \big(E(v_2) - E(r)\big).E(x) + \big(E(r) - E(v_1)\big).E(y)$$

And

$$E(l) = \big(E(r) - E(v_1)\big).E(x) + \big(E(v_2) - E(r)\big).E(y)$$

As a result, the output of this sort operation provides an encrypted version of a smaller number E(s) and an encryption version of a larger number E(I), arranged in descending order, from an input of two encrypted values E(x) and E(y). I.e:

$$f_3\{E(x), E(y)\} \rightarrow \{E(l), E(s)\}$$

As a FHE scheme enables both addition and multiplication operations to be performed homomorphically over ciphertexts, it also enables a polynomial to be evaluated over a ciphertext homomorphically - i.e. the sorting can be performed on encrypted data and produce an encrypted result without the need for any decryption, thereby maintaining data security.

The above sorting techniques can be used with existing sorting algorithms (e.g. insertion sort, quick sort) to sort set of more than two encrypted numbers based on their unencrypted values, without having to decrypt the numbers or the results of the sort.

Further, as all data processed in a computing environment can be represented as binary numbers, it is possible to sort all computer storable data. For example, alpha-numeric values such as names or addresses can be compared and sorted.

As well as numerous cloud computing applications, the methods set out above are also relevant to the field of machine learning methods, e.g. decision trees, random forests, etc., require a comparison to be performed. The present method of comparison enables the training data to be provided in encrypted form as the encrypted data can be compared and sorted thereby improving the anonymity and security of the training data (as it removes the need to provide training data in plaintext form).

In addition, the present disclosure enables the evaluation of the comparison of an if then loop (e.g. if x=y then...) on encrypted data thereby providing a way to perform an encrypted if then loop.

**Claims**

1. A computer implemented method for manipulating encrypted data comprising comparing a homomorphically encrypted first data value, $E(y)$, with a homomorphically encrypted second data value, $E(x)$, in a homomorphic encryption system, the method comprising:

   subtracting the homomorphically encrypted first data value, $E(y)$, from the homomorphically encrypted second data value, $E(x)$, to produce a homomorphically encrypted third data value, $E(z)$; and
   using programmable bootstrapping to evaluate a function, f, on the homomorphically encrypted third data value $E(z)$, wherein the function, f, returns:

   an encrypted first value, $E(r_0)$, if the third data value is zero, or
   an encrypted second value, $E(r_1)$, if the third data value is negative, or
   an encrypted third value, $E(r_2)$, if the third data value is positive, whereby

   an encrypted result, $E(r)$, is output by the programmable bootstrapping step where the encrypted result $E(r)$, when decrypted, is a value indicative of the result of the comparison.

2. The method of claim 1, wherein using programmable bootstrapping to evaluate the function, f, on the homomorphically encrypted third data value $E(z)$ comprises:
   using a lookup table to find an encrypted value indicative of the outcome of a comparison based on the homomorphically encrypted third data value.

3. The method of claim 2, wherein at least one value in the look up table is a client defined encrypted value.

4. The method of any preceding claim, comprising sorting the first and second value in order of magnitude based on the results of the comparison.

5. The method of claim 4, wherein the first and second values represent one or more alpha numeric characters.

6. The method of any preceding claim, comprising assigning a client defined first encrypted value $E(v_1)$ to the encrypted second value $E(r_1)$, and a client defined second encrypted value $E(v_2)$ value to the encrypted third value $E(r_2)$.

7. The method of claim 6, wherein the difference between the client defined first value $v_1$ and the client defined second value $v_2$ is 1.

8. The method of claim 6 or 7, wherein the client defined first value $v_1$ is equal to zero.

9. The method of any one of claims 6-8, comprising assigning either the client defined first value $v_1$ or the client defined second value $v_2$ to the encrypted first value $E(r_0)$.

10. The method of any one of claims 1-5, comprising assigning a client defined third encrypted value $E(v_0)$ value to the encrypted first value $E(r_0)$.

11. A computer implemented method for machine learning comprising the method of any preceding claim.

12. A computer implemented method for performing an if-then step comprising the method of any preceding claim.

13. A computer program comprising instructions which, when the program is executed by a computer, cause the computer to carry out the method of any preceding claim.

14. A computer-readable medium comprising instructions which, when executed by a computer, cause the computer to carry out the method of claim of any one of claims 1-11.

15. A computing device comprising means for comparing a homomorphically encrypted first data value, E(y), with a homomorphically encrypted second data value, E(x), in a homomorphic encryption system, said means comprising:

means for subtracting the homomorphically encrypted first data value, E(y), from the homomorphically encrypted second data value, E(x), to produce a homomorphically encrypted third data value, E(z); and
means for using programmable bootstrapping for the evaluation of a function, f, on the homomorphically encrypted third data value E(z), wherein the means for using is configured to return:

an encrypted first value, $E(r_0)$, if the third data value is zero, or
an encrypted second value $E(r_1)$, if the third data value is negative, or
an encrypted third value $E(r_2)$ if the third data value is positive, whereby:

the computing device is configured to provide an encrypted result, E(r), wherein the encrypted result, E(r), when decrypted, is a value indicative of the result of the comparison.

16. The computing device of claim 15, wherein:
the computing device is configured to use a lookup table to find an encrypted value indicative of the outcome of a comparison based on the homomorphically encrypted third data value.

17. A computer implemented method for manipulating encrypted data comprising sorting, by magnitude, a tuple of homomorphically encrypted data valued, E(x) and E(y), in a homomorphic encryption system, the method comprising:
comparing the two encrypted input values, E(x) and E(y), and providing an encrypted output value, $E(r)$, wherein:

the step of comparing is configured to output:

an encrypted first output value $E(v_1)$ if x is less than y, wherein the first output value $v_1$ is a predefined value indicative of x being less than y; and
an encrypted second output value $E(v_2)$ if x is greater than y, wherein the second output value $v_2$ is a predefined value indicative of x being greater than y; and

determining the encrypted input value that has, when decrypted, the largest or smallest magnitude based on the encrypted output value, $E(r)$, provided by the comparison, the encrypted first output value $E(v_1)$, and the encrypted second output value $E(v_2)$.

18. The method of claim 17, wherein either the difference between the first output value $v_1$ and the second output value $v_2$ equals 1.

19. The method of claim 18, wherein either the first output value $v_1$ or the second output value $v_2$ equals 1.

20. The method of any one of claims 17 to 19, wherein determining the encrypted input value having the largest or smallest magnitude comprises calculating the encrypted input value that has, when decrypted, the smallest magnitude, $E(s)$, based on:

$$E(s) = \big(E(v_2) - E(r)\big).E(x) + \big(E(r) - E(v_1)\big).E(y).$$

21. A computer program comprising instructions which, when the program is executed by a computer, cause the computer to carry out the method of any one of claims 17 to 20.

22. A computer-readable medium comprising instructions which, when executed by a computer, cause the computer to carry out the method of claim of any one of claims 17 to 20.

23. A computing device comprising means for manipulating sorting, by magnitude, a tuple of homomorphically encrypted data valued, E(x) and E(y), in a homomorphic encryption system, the means comprising:
means for comparing the two encrypted input values, E(x) and E(y), and providing an encrypted output value, $E(r)$, wherein:

the means for comparing is configured to output:

an encrypted first output value $E(v_1)$ if x is less than y, wherein the first output value $v_1$ is a predefined value indicative of x being less than y; and
an encrypted second output value $E(v_2)$ if x is greater than y, wherein the second output value $v_2$ is a predefined value indicative of x being greater than y; and
means for determining the encrypted input value that has, when decrypted, the largest or smallest magnitude based on the encrypted output value, $E(r)$, provided by the comparison, the encrypted first output value $E(v_1)$, and the encrypted second output value $E(v_2)$.

**Amended claims in accordance with Rule 137(2) EPC.**

1. A computer implemented method for manipulating encrypted data comprising comparing a homomorphically encrypted first data value, E(y), with a homomorphically encrypted second data value, E(x), in a homomorphic encryption system that supports programmable bootstrapping, the method comprising:

subtracting the homomorphically encrypted first data value, E(y), from the homomorphically encrypted second data value, E(x), to produce a homomorphically encrypted third data value, E(z); and
using programmable bootstrapping to evaluate a function, f, on the homomorphically encrypted third data value E(z), wherein the function, f, returns:

an encrypted first value, $E(r_0)$, if the third data value is zero, or
an encrypted second value, $E(r_1)$, if the third data value is negative, or
an encrypted third value, $E(r_2)$, if the third data value is positive, whereby

an encrypted result, E(r), is output by the programmable bootstrapping step where the encrypted result E(r), when decrypted, is a value indicative of the result of the comparison.

2. The method of claim 1, wherein using programmable bootstrapping to evaluate the function, f, on the homomorphically encrypted third data value E(z) comprises:
using a lookup table to find an encrypted value indicative of the outcome of a comparison based on the homomorphically encrypted third data value.

3. The method of claim 2, wherein at least one value in the look up table is a client defined encrypted value.

4. The method of any preceding claim, comprising sorting the first and second value in order of magnitude based on the results of the comparison.

5. The method of claim 4, wherein the first and second values represent one or more alpha numeric characters.

6. The method of any preceding claim, comprising assigning a client defined first encrypted value $E(v_1)$ to the encrypted second value $E(r_1)$, and a client defined second encrypted value $E(v_2)$ value to the encrypted third value $E(r_2)$.

7. The method of claim 6, wherein the difference between the client defined first value $v_1$ and the client defined second value $v_2$ is 1.

8. The method of claim 6 or 7, wherein the client defined first value $v_1$ is equal to zero.

9. The method of any one of claims 6 - 8, comprising assigning either the client defined first value $v_1$ or the client defined second value $v_2$ to the encrypted first value $E(r_0)$.

10. The method of any one of claims 1-5, comprising assigning a client defined third encrypted value $E(v_0)$ value to the encrypted first value $E(r_0)$.

11. A computer implemented method for machine learning comprising the method of any preceding claim.

12. A computer implemented method for performing an if-then step comprising the method of any preceding claim.

13. A computer program comprising instructions which, when the program is executed by a computer, cause the computer to carry out the method of any preceding claim.

14. A computer-readable medium comprising instructions which, when executed by a computer, cause the computer to carry out the method of claim of any one of claims 1-11.

15. A computing device comprising means for comparing a homomorphically encrypted first data value, $E(y)$, with a homomorphically encrypted second data value, $E(x)$, in a homomorphic encryption system that supports programmable bootstrapping, said means comprising:

means for subtracting the homomorphically encrypted first data value, $E(y)$, from the homomorphically encrypted second data value, $E(x)$, to produce a homomorphically encrypted third data value, $E(z)$; and
means for using programmable bootstrapping for the evaluation of a function, f, on the homomorphically encrypted third data value $E(z)$, wherein the means for using is configured to return:

an encrypted first value, $E(r_0)$, if the third data value is zero, or
an encrypted second value $E(r_1)$, if the third data value is negative, or
an encrypted third value $E(r_2)$ if the third data value is positive, whereby:

the computing device is configured to provide an encrypted result, $E(r)$, wherein the encrypted result, $E(r)$, when decrypted, is a value indicative of the result of the comparison.

Europäisches
Patentamt

European
Patent Office

Office européen
des brevets

# EUROPEAN SEARCH REPORT

Application Number

EP 23 16 8475

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CHEN JIALU ET AL: "Lightweight Privacy-Preserving Training and Evaluation for Discretized Neural Networks", IEEE INTERNET OF THINGS JOURNAL, IEEE, USA, vol. 7, no. 4, 18 September 2019 (2019-09-18), pages 2663-2678, XP011783738, DOI: 10.1109/JIOT.2019.2942165 * paragraph [00VI] * | 1-15 | INV. H04L9/00 G06F7/02 H04L9/30 |
| Y | JAKUB KLEMSA ET AL: "PARMESAN: Parallel ARithMEticS over ENcrypted data", IACR, INTERNATIONAL ASSOCIATION FOR CRYPTOLOGIC RESEARCH , vol. 20230417:090428 17 April 2023 (2023-04-17), pages 1-41, XP061077538, Retrieved from the Internet: URL:https://eprint.iacr.org/archive/2023/544/1681722268.pdf [retrieved on 2023-04-17] * paragraph [0001] - paragraph [0004] * | 1-15 | |
| A | OKADA HIROKI ET AL: "Linear Depth Integer-Wise Homomorphic Division", 12 May 2019 (2019-05-12), 20190512, PAGE(S) 91 - 106, XP047622557, * paragraph [0002] * | 1-15 | TECHNICAL FIELDS SEARCHED (IPC) G06F H04L |
| A | REDDY B PRAEEP KUMAR ET AL: "Encrypted Classification Using Secure K-Nearest Neighbour Computation", 21 November 2019 (2019-11-21), 16TH EUROPEAN CONFERENCE – COMPUTER VISION – ECCV 2020, PAGE(S) 176 - 194, XP047528245, * paragraph [0001] - paragraph [0005] * | 1-15 | |

-/--

The present search report has been drawn up for all claims

| Place of search | Date of completion of the search | Examiner |
|---|---|---|
| Munich | 30 January 2024 | Bec, Thierry |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................

& : member of the same patent family, corresponding
document

EPO FORM 1503 03.82 (P04C01)

Europäisches
Patentamt

European
Patent Office

Office européen
des brevets

## EUROPEAN SEARCH REPORT

Application Number

EP 23 16 8475

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | BOURSE FLORIAN ET AL: "Improved Secure Integer Comparison via Homomorphic Encryption", 14 February 2020 (2020-02-14), 16TH EUROPEAN CONFERENCE – COMPUTER VISION – ECCV 2020, PAGE(S) 391 – 416, XP047535526, * paragraphs [0001], [0002] * | 1-15 | |

-----

TECHNICAL FIELDS
SEARCHED    (IPC)

The present search report has been drawn up for all claims

| Place of search | Date of completion of the search | Examiner |
|---|---|---|
| Munich | 30 January 2024 | Bec, Thierry |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

....................................................................

& : member of the same patent family, corresponding
    document

EPO FORM 1503 03.82 (P04C01)

Europäisches
Patentamt

European
Patent Office

Office européen
des brevets

**Application Number**

**EP 23 16 8475**

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-15

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

The Search Division considers that the present European patent application does not comply with the requirements of unity of invention and relates to several inventions or groups of inventions, namely:

    1. claims: 1-15

        Comparing homomorphically encrypted values using bootstrapping evaluation on the difference between two encrypted value and provided a result indicating a value equal to 0, negative or positive.
          ---

    2. claim: 17

        Relative comparison of encrypted valued based on magnitude to decide which is the smallest or greatest value.
          ---

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CRAIG GENTRY.** *Fully Homomorphic Encryption Using Ideal Lattices*
- **VAN DIJK.** *Fully Homomorphic Encryption over the Integers*
- **CRAIG GENTRY.** *Homomorphic Encryption from Learning with Errors: Conceptually-Simpler, Asymptotically-Faster, Attribute-Based*
- **ILARIA CHILLOTTI.** *Faster Fully Homomorphic Encryption: Bootstrapping in less than 0.1 Seconds*
- **ILARIA CHILLOTTI.** *TFHE: Fast Fully Homomorphic Encryption Over the Torus*
- **ILARIA CHILLOTTI.** *Programmable Bootstrapping Enables Efficient Homomorphic Inference of Deep Neural Networks*